# EUROPEAN PATENT APPLICATION

(11) **EP 2 107 504 A1**
(43) Date of publication of application: **07.10.2009**
(21) Application number: 08006388.6
(22) Date of filing: 31.03.2008
(51) Int. Cl.: G06K 9/00, G05D 1/02

(54) **Method and device for generating a real time environment model for vehicles**

(71) Applicant: Harman Becker Automotive Systems GmbH, 76307 Karlsbad (DE)
(72) Inventor: Schaufler, Roland, 74912 Kirchardt-Berwangen (DE)
(74) Representative: Grünecker, Kinkeldey, Stockmair & Schwanhäusser Anwaltssozietät

(57) **Abstract**

The present invention provides a vehicle environment monitoring device and method that is based on transmitting a three-dimensional vector model generated at a vehicle to an external location. The three-dimensional vector model of the vehicle's environment is generated on the basis of the image data captured by at least a three-dimensional camera. Out of the image data, particular data are extracted for generating the three-dimensional vector model in order to reduce the data volume and thus the bandwidth requirements for transmission. Possible applications of the transmitted vector model include, but are not limited to driver assistance, external monitoring and vehicle control, as well as overall traffic monitoring and control. Preferably, a sequence of three-dimensional vector models, representing a three-dimensional space-and-time model, is generated and transmitted.

## Description

The present invention relates to vehicle environment models. In particular, the present invention relates to camera-based vehicle environment models for real time applications.

Contemporary vehicles are equipped with a series of sensors. Vehicle sensors include sensors of a first kind for detecting variables that are related to the status of the vehicle itself, as well as sensors of a second kind for detecting variables of the environment of the vehicle.

Examples of first type sensors include sensors for motor rotation speed, brake status, throttle position, vehicle speed and acceleration, steering position, tyre pressure, occupant position, seatbelt position, passenger airbag status and others. Sensors of the second type include temperature sensors, distance sensors, antennae of telematic and navigation systems and others.

In particular, in modern practice, it is becoming more and more common to also equip vehicles with cameras. A vehicle can be equipped with a single or a plurality of cameras mounted at different positions inside and/or outside the vehicle. Cameras mounted inside a vehicle can be employed for monitoring objects and events occurring inside the vehicle, and are specifically used in vehicles of public transportation, such as buses and coaches. Cameras for monitoring the environment of the vehicle are specifically designed to capture images of a certain sector of a vehicle's environment.

Data obtained from sensors of a vehicle, including cameras, are employed for a variety of purposes. A basic class of functions, for which it is necessary to collect and further process sensor data is the field of driver assistance systems. Driver assistance systems known in the art cover a large range of functions. Systems exist that simply provide a driver with particular information, including warning in the case of possible emergency situations inside or outside the vehicle. More sophisticated driver assistance systems enhance a driver's comfort by interfering with or partly taking over control functions in complicated or critical driving situations. Examples for the latter class of driver assistance systems are antilock brake systems (ABS), traction control systems (PCS), and electronic stability programs (ESP). Further systems that are currently under development and do not yet belong to default vehicle equipment include adaptive cruise control, intelligent speed adaptation and predictive safety systems.

Furthermore, vehicle sensors are employed for environment monitoring for other purposes than vehicle safety and control, such as for patrol vehicles monitoring parking cars or for recording in event data recorders. Event data recorders (EDR, also known as "black box") record internal and external information gathered by various sensors of a vehicle, in order to enable a reconstruction of events that have occurred in the last few seconds or minutes immediately before an accident.

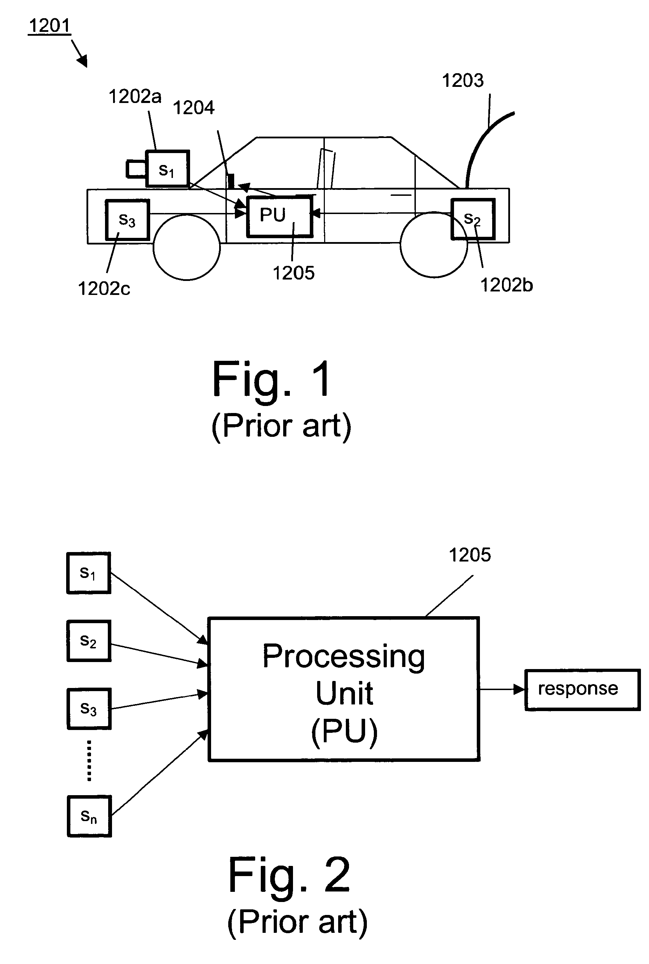

Fig. 1 illustrates an example of a vehicle (a car 1201) that is equipped with a plurality of sensors, including a camera 1202a and further sensors 1202b and 1202c. The car is moreover equipped with an antenna 1203, which enables reception and transmission of data, including, for instance, those of a satellite navigation system. Sensor data is forwarded to a processing unit 1205, wherein the data are processed in order to generate a response. A response generated by the processing unit 1205 may include signals for triggering any driver assistance functions, including those commonly employed by the above mentioned driver assistance systems. In the simplest case, the processing unit issues signals comprising information to be notified to a driver. In particular, notification can be issued for display on a display device 1204 that is arranged near the driver's seat.

Fig. 2 is a principal block scheme of a conventional driver assistance system. Data collected by a plurality of sensors (s₁, s₂, s₃, ..., sₙ in Fig. 2) are fed into processing unit 1205. Processing unit 1205 generates a response on the basis of processing the data received from the sensors. The response includes signals that are either forwarded to a device for notifying the driver, or to specific units for particular control functions.

In the particular case of employing cameras, a rather complete information of a section of a vehicle's environment can be obtained by capturing an image. By employing several cameras, a range of a vehicle's environment covers all directions, rather than only a particular section, such as a section in forward direction. Cameras mounted to a vehicle include two-dimensional (2D) and three-dimensional (3D) cameras. While 3D-cameras are capable of capturing a three-dimensional image in one shot, by employing two separate optical systems mounted adjacent to each other, in a similar manner as a stereoscopic view is achieved with the help of a pair of human eyes, three-dimensional environment information of a moving vehicle can also be obtained by only employing a single two-dimensional camera. Therefore, additional information from sensors detecting a moving speed and direction, as well as changes in vehicle orientation are employed. On the basis of the additional data, an approximate three-dimensional environment model can be generated, by evaluating changes between two-dimensional images that have been captured at subsequent instances of time with respect to said detected vehicle motion parameters.

Although cameras are generally capable of providing rather complete information, it is a drawback of conventional systems employing cameras as sensors that they provide a large amount of information that is redundant or irrelevant in a particular situation, or in view of the particular purpose for which the information is to be used. Accordingly, a large processing time is required in order to process the large volume of data included in images captured by cameras. Therefore, in the case of employing cameras as sensors of a vehicle, the advantage of obtaining more complete information compared to a case wherein only specific sensors are employed, goes hand in hand with a drawback of large processing times required for obtaining a response to the received data. On the other hand, processing capacity and performance of data processing systems that are available on board of a vehicle are generally limited.

The present invention aims to provide an improved method and device for more efficiently obtaining and employing environment monitoring information of a camera-equipped vehicle.

This is achieved by the features of the independent claims.

According to a first aspect of the present invention, a method of monitoring the environment of a camera-equipped vehicle is provided. In a first step, a three-dimensional image of the environment of the vehicle is captured. The three-dimensional image represents a predetermined area of the vehicle environment. The following step reduces the amount of information acquired in the image capturing step by extracting data from the three-dimensional image employing a data extraction algorithm. In a further step, a three-dimensional vector model of the vehicle environment is generated from the data extracted from the three-dimensional image. Subsequently, the three-dimensional vector model is transmitted to an external location with respect to the vehicle.

According to another aspect of the present invention, an environment monitoring device for monitoring the environment of a vehicle is provided. The device comprises a three-dimensional camera for capturing an image of the environment of the vehicle. The image represents a predetermined area of the vehicle environment. The environment monitoring device further comprises first processing means for processing the information required by said three-dimensional camera. The first processing means include extracting means for extracting data from the image by employing a data extraction algorithm. Moreover, the first processing means include model generating means for generating a three-dimensional vector model of the vehicle environment from the data extracted from the image. The environment monitoring device further comprises a transmitter for transmitting the three-dimensional vector model to an external location with respect to the vehicle.

It is the particular approach of the present invention to transmit a three-dimensional vector model generated from a captured three-dimensional image of an environment of a vehicle to an external location. Particular data extracted out of the image information are employed for generating the three-dimensional vector model of the vehicle environment. Thereby, a reduction of the complete information captured by a three-dimensional camera is enabled, and a high density of monitoring information is achieved, while redundant or unnecessary information is neglected. Accordingly, bandwidth requirements for transmitting environmental data are significantly reduced.

The information content of the three-dimensional vector model is rendered available for external further processing. The particular approach of the present invention enables the possibility of evaluation of data captured by a vehicle camera at an external site having a powerful data processing infrastructure, such as a central server. In particular, the three-dimensional vector model can be employed for generating measures for assisting a driver in response to environment information reflected in the 3D-vector model, for visualizing, or even for remotely controlling a vehicle.

According to a preferred embodiment, a sequence of three-dimensional vector models representing a three-dimensional space-and-time model is transmitted to the external location.

Preferably, a three-dimensional vector model is transmitted by radio. According to an alternative preferred embodiment, the three-dimensional vector model is transmitted via a cellular telephone line. Preferably, the three-dimensional vector model is transmitted for visualizing on an external computer. Accordingly, for instance, an instructor of a driving school can watch a plurality of vehicles undergoing training in a training area.

In a further preferred embodiment, the three-dimensional vector model is further evaluated in an external computer. Still more preferably, the results of the evaluation are transmitted back to the vehicle. More preferably, the evaluation results are employed for remotely controlling the vehicle. Either, the re-transmitted evaluation results are used for generating and issuing the control signal at the vehicle itself. Alternatively, a control signal can be generated at the external location, so that only the control signal itself is re-transmitted to the vehicle.

Preferably, the external location is a stationary location.

According to a preferred embodiment, the data extraction algorithm to be employed in the step of reducing the amount of information acquired in the image capturing step is determined based on at least one parameter characterizing the vehicle situation. Thereby, a situation-dependent extraction of particular data from a captured three-dimensional image is enabled. Amount and character of the data that are extracted are determined adapted to the specific situation and the intended target of the environment monitoring. A situation-dependent reduction of the complete information captured achieves a high density of monitoring information in a target-oriented manner. The environment data collection is decoupled from the intelligence for issuing a response in a situation adapted manner. Therefore, a trade-off between transmission bandwidth and response time requirements and accuracy of information content is achieved.

Preferably, the data extraction algorithm is adapted to the processing time for generating the 3D-vector model that is available. According to a further preferred embodiment, the data extraction algorithm is adapted to the required information content of the 3D-vector model. In accordance therewith, the present invention enables a situation adapted balancing between processing time and information content requirements. For instance, for driver assistance of a vehicle driving at a high speed on a motorway, it is crucial to have a response time as short as possible. As the system response time basically depends on the processing time, it is therefore advisable to extract only the most security relevant data, and to discard that data that is of no or only minor relevance for vehicle security in generating the model, in order to save processing time. On the other hand, in a situation such as visualizing an overall traffic situation at a control center, processing time is no of such critical importance. Therefore, the model generated for visualization can include more information and, for instance, cover a larger field of the environment of the vehicle.

Preferably, the data extraction algorithm includes object recognition. Object recognition enables the representation of features of predefined objects in an especially data saving manner.

Preferably, the data extraction algorithm includes filtering the captured three-dimensional image. Accordingly, the image is pre-processed to reduce the data amount and to avoid an undesired inaccuracy.

Preferably, the data extraction algorithm extracts data only from a part of the three-dimensional image corresponding to a certain visual field. For instance, in a case of driving at a high speed, the most relevant information is contained in a visual field representing a narrow cone-shaped sector in forward and backward direction of the driven car. It is desirable to quickly grasp changes in the traffic situation, even those occurring at a far distance. On the other hand, for parking a car under conditions of limited space, it is advantageous to have an all- round view, which can, however, be limited to a narrow range of distance.

Preferably, the three-dimensional vector model is further processed for assisting a driver in controlling the vehicle based on the processing result. Further processing is performed at an external site, where the 3D-vector model is provided. Optionally, means for further processing the 3D-vector model can be additionally provided on board of the vehicle, and included in the environment monitoring device.

Preferably, for determining the data extraction algorithm, a maximum available amount of time for generating and further processing the three-dimensional vector model is determined based on the vehicle situation. Accordingly, the data reduction can be performed in direct adaptation to the response time requirements.

More preferably, in correspondence with the determined maximum amount of time, a maximum amount of data to be extracted is further determined. The processing time and the respective response time basically depend on the data amount to be processed. It is thereby guaranteed that the response time can be kept within an upper limit that is predetermined for the specific situation.

Still more preferably, the extraction algorithm is determined taking into account a priority for different kinds of data to be extracted from the three-dimensional image. For different vehicle situations and for different purposes of employing the three-dimensional vector model, different kinds of data are of importance, while other data are less important or can be completely disregarded. Under the condition of a limited amount of data to be processed, it is therefore desirable not only to define an upper limit of the data amount, but also to define priorities of the different kinds of data to be extracted, until the limit of data amount is reached. For instance, for collision warning on a motorway, most relevant kinds of data are positions and relative velocity to other vehicles on the motorway. On the other hand, for a parking assistance, detailed object information of all objects is required, but only in a low distance range around the vehicle.

According to a preferred embodiment, the vehicle situation is analysed based on the captured three-dimensional image itself, in order to obtain a parameter characterizing the current vehicle situation. Object recognition can, for instance, determine based on an image, whether a vehicle is being driven in dense traffic or not. Also environmental parameters such as the width of the road can be easily recognized from an image.

According to a further preferred embodiment, vehicle status information is detected, in addition to the information captured by the three-dimensional camera. Vehicle status information provides a value of a parameter for characterizing the vehicle situation. More preferably, the detected vehicle status information includes velocity information of the vehicle. Accordingly, the parameters that are generally measured in a vehicle can be employed for determining the data extraction algorithm, without any further effort. According to a preferred embodiment, the size of the visual field from which the data extraction algorithm extracts data is the smaller the higher the velocity of the vehicle is. Accordingly, information from a larger distance can be taken into account while not enlarging the overall data amount.

Preferably, the environment monitoring device is capable of taking into account a parameter value that has been received from an input interface. For instance, according to the preferred embodiment, a switchover is enabled between a parking assistant mode and a mode for assisting a driver in dense traffic. In accordance with the preferred embodiment, the determination of the extraction algorithm includes defining variables of an algorithm. For instance, filtering parameters for filtering a complete image of a part of an image can be adjusted in accordance with accuracy and data amount requirements.

According to a further preferred embodiment, a particular one of a plurality of available data extraction algorithms is selected, on the basis of a parameter describing the vehicle situation.

Preferably, the three-dimensional vector model represents objects in the environment of the vehicle by vectors and object specification information. The object specification information associates an object with standard object classes of an object model. Employing an object model is particularly advantageous in connection with object recognition. A recognized object is associated with standard object information of a database. It is therefore not necessary to process information once more every time when a new object belonging to one of the standard classes occurs.

More preferably, the object model is stored in a database. A database enables the pre-storing of standard information of such objects that are most likely to occur and most relevant to the vehicle's environment, such as other vehicles, persons and traffic signs.

According to a further preferred embodiment, the sequence of three-dimensional vector models is generated during a certain period of time. Thereby, a three-dimensional space-and-time model is obtained.

More preferably, a co-ordinate system fixed to the vehicle is used as a reference system for the vectors of the sequence of the three-dimensional vector models. Employing a vehicle centered reference system enables the most natural view of all modifications occurring in the vehicle's environment with time, as only the changes occurring relative to the vehicle are of importance.

According to a further preferred embodiment, a response to the information of the vehicle environment represented by the three-dimensional space-and-time model is generated, based on the further processing. Accordingly, the three-dimensional space-and-time model is employed to realize functions for assisting a driver, or directly interfering with vehicle control.

More preferably, a generated response is directed towards avoiding an emergency situation such as the threat of a collision or a loss of the driver's control over his vehicle. More preferably, the response comprises a notification of an indication of an emergency situation to be expected to the driver. The notification can be issued in the form of an acoustic signal and/or a warning on a display within the field of vision of the driver. Further preferably, a device for assisting a driver to avoid an emergency situation is notified. According to a further preferred embodiment, a response generated on the basis of the three-dimensional space-and time model comprises an automatic interference with vehicle control. For instance, the present invention enables automatic braking, if any notifications of collision warning have been ignored for a predetermined time, or if it is judged, on the basis of the three-dimensional space-and time model that the probability of a collision has become larger than a predefined threshold.

According to an alternative preferred embodiment, the generated response is directed towards assisting a driver in parking the vehicle.

According to a further preferred embodiment, the response comprises taking countermeasures to minimize the consequences of a threatening accident. More preferably, the counter measures comprise status control of vehicle safety equipment, such as an airbag or a seatbelt. For instance, if the three-dimensional space-and time model indicates that a collision is likely to occur, an airbag can be controlled to be transferred in a pre-triggered status. Accordingly, the airbag can be released faster, if the collision indeed occurs. On the other hand, if it is nevertheless possible to still avoid the collision, the airbag can be returned to the normal status, and remains unused.

Preferably, a plurality of three-dimensional images is captured from plural camera positions. More preferably, the plurality of three-dimensional images represent an environment area including a predetermined range around the vehicle. As the field of vision of a single camera is generally limited, a plurality of cameras can provide more complete information about the environment of the vehicle. Alternatively, a position of a single camera can be controlled so as to provide a different view. For instance, a camera can be panned around.

According to a further preferred embodiment, in addition to image data to be captured by a camera, also data from further sensors a vehicle is equipped with are taken into account for generating the three-dimensional vector model. More preferably, for generating the three-dimensional vector model, a process of sensor fusion is employed to transform sensor data into a unique format. During sensor fusion, moreover, data acquired from different sensors is checked for inconsistencies. Inconsistent and redundant data is removed during sensor fusion. Image data is included into the process of sensor fusion.

Preferably, the further sensors employed for generating the three-dimensional vector model include a motion sensor, an accelerometer, a temperature sensor, a radar sensor and/or an infrared sensor.

According to a further preferred embodiment, the three-dimensional vector model is additionally saved in an event data recorder. An event data recorder enables reconstruction of crash details in the case of an accident. The storage capacity of an event data recorder is generally limited. Therefore, the depth of the history that can be stored in an event data recorder (i.e. the time period immediately before an accident, for which the event data recorder can store data) considerably depends on the amount of data to be stored representing the overall (environmental and internal) vehicle situation at each single instance of time. On the other hand, the event data recorder does not require the inclusion of complete image information, but rather only information concerning position, as well as absolute value and direction of the velocity of the vehicle itself, and all objects and subjects in the immediate neighbourhood of the driven vehicle.

More preferably, a sequence of three-dimensional vector models that has been generated during a predetermined period of time is saved into the event data recorder. Still more preferably, the three-dimensional vector models of the sequence are associated with time stamps before saving. Still more preferably, the three-dimensional vector models are saved for a predetermined storing time, which approximately corresponds to an available storage capacity. Only in the case that an impact is detected that is most probably caused by an extraordinary event such as an accident, the three-dimensional vector models remain permanently saved, while further storage of newly generated vector models is inhibited. Still more preferably, the three-dimensional vector models are stored in a cyclic storage having a predetermined storage capacity, and are cyclically overwritten, as long as no impact is detected.

Further preferred embodiments of the present invention are the subject matter of dependent claims.

Additional features and advantages of the present invention will become apparent from the following description of the invention as illustrated in the drawings, wherein:
Fig.1 illustrates an example of a vehicle comprising a prior art environment monitoring device;
Fig.2 illustrates in a block diagram the scheme of a prior art environment monitoring system;
Fig.3 schematically illustrates a vehicle comprising an environment monitoring system in accordance with the present invention;
Fig.4 is a block diagram illustrating an overall scheme of an environment monitoring system in accordance with an embodiment of the present invention;
Fig.5 is a detailed scheme of a first processing unit included in a vehicle environment monitoring device in accordance with an embodiment the present invention;
Fig.6 is a flow chart illustrating the vector model generation in a of a vehicle environment monitoring method according to the present invention;
Fig.7 is a flow chart illustrating further processing of a three-dimensional vector model of a vehicle's environment in accordance with embodiments of the present invention;
Fig.8 illustrates the structure of an object model employed in accordance with an embodiment of the present invention;
Fig.9 is a flow chart illustrating the concept of sensor fusion as employed in an embodiment of the present invention;
Fig.10 is a flow chart illustrating an application of a three-dimensional vector model for driver assistance in accordance with an embodiment of the present invention;
Fig.11A schematically illustrates the storage of a conventional image based event data recorder;
Fig.11B schematically illustrates the storage of an event data recorder in accordance with an embodiment of the present invention; and
Fig.12 schematically illustrates the concept of cyclically overwriting data in an event data recorder in accordance with an embodiment of the present invention.

The illustrated embodiments of the present invention will now be described with reference to the drawings.

In a vehicle that is equipped with a series of sensors that include at least one three-dimensional camera, a three-dimensional vector model of the current vehicle environment situation is generated and transmitted to an external site in real time. The model includes all relevant static and moving objects in a prior certified range of the vehicle's environment, i.e. in a space area surrounding the vehicle. The objects are preferably captured by the camera and further sensors and then classified with the help of a database and special algorithms. The model represents an interface that decouples the sensors of a vehicle from the intelligence for generating activities in response to the information contained in the data collected by the sensors, and represented by the vector model. A sequence of three-dimensional vector models generated at different instances of time represents a three-dimensional space-and-time model.

By using a three-dimensional space-and-time model of the vehicle environment rather than data obtained from various cameras and sensors themselves, maximum information density is achieved. The real world is thus compressed into a model by getting rid of irrelevant, useless or redundant information. Accordingly, bandwidth requirements for transmission and processing time can be minimized, and the possibilities for interpreting the information are improved. The evaluation of the information included in the transmitted three-dimensional vector model at the central site may include, but is not limited to providing a response for assisting the driver, remotely interfering with vehicle control, and visualizing a traffic situation, for instance in order to detect an emerging traffic congestion in quasi real time. The external site to which the 3D vector model information is transmitted is preferably a central cite such as a traffic control center having powerful computer equipment. However, also movable external sites, for instance on traffic control vehicles are possible.

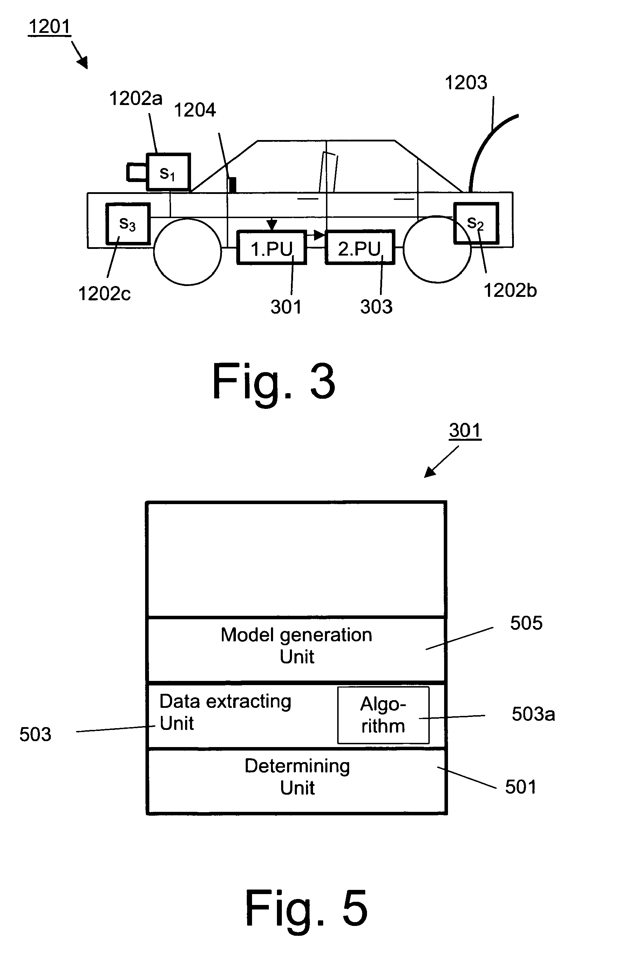

Fig.3 is a general overview of a vehicle 1201 including an environment monitoring system in accordance with the present invention. The system includes a plurality of sensors 1202. Among the sensors, there is at least one three-dimensional camera 1202a.

In preferred embodiments, a plurality of cameras of different types (not shown) are included in the environment monitoring system. Different types of cameras cover different viewing angles. Cameras to watch the traffic in front of the car capture images that can be used to assist a driver with pre-crash detection, land departure warning, traffic sign recognition, distance of objects measurement, active cruise control etc. Furthermore, an internal camera can be employed to replace sensors that recognize the number of passengers, their state and behaviour, the seatbelt state etc., for instance, so as to control the behaviour of airbags.

The three-dimensional camera is generally capable of capturing an image representing information about a certain sector (corresponding to a camera's view angle) of the vehicle's environment. A conventional three-dimensional camera (stereoscopic camera) comprises two optical systems at slightly different positions having a small distance with respect to each other. Three-dimensional information is generated on the basis of a perspective transformation detected by comparing the two-dimensional images captured from the two different optical systems. However, a conventional three-dimensional camera has certain drawbacks. For instance, it is difficult to reconstruct distance information with a stereoscopic three-dimensional camera for objects covering a large area with very similar grey scale values, such as walls or street surfaces. It will, for instance, be difficult to generate distance information to assist the driver in parking a car in front of a wall of a building, on the basis of a stereoscopic three-dimensional camera.

More sophisticated three-dimensional camera systems include so-called three-dimensional TOF (time-of-flight) sensors. A TOF based three-dimensional camera captures an image of an object in the same manner as a conventional camera. Additionally, a distance measurement is performed on the basis of phase difference between light signals sent from the camera to the object and reflected therefrom, and a reference signal. A correlation receiver detects the light signal reflected from the object and correlates the received signal with a reference signal that is transmitted from the camera via a direct path, over a predetermined distance. By evaluating the phase difference, the distance between the camera and the object can be safely determined. By evaluating the distances between the camera and the plurality of objects captured in an image, a three-dimensional representation of an image is obtained. Preferably, a PMD (photonic mixer device) camera is employed.

Optionally, the environment monitoring system comprises further sensors 1202b, 1202c other than cameras. Sensors 1202b, 1202c may, for instance, include a motion sensor, an accelerometer, a temperature sensor, a radar sensor, and infrared sensor, without being limited to these examples. An antenna 1203 is employed for transmitting data from the environment monitoring system to a remote location. Also, in correspondence with an embodiment, re-transmitted data from a remote location can be employed for driver assistance and remote control functions. The antenna can, moreover, form a part of a navigation system for receiving navigation information, and can also form a part of a cellular telephone system. Together with the three-dimensional vector model, further data, such as GPS (Global Positioning System)- data, for instance determined by a navigation control system installed in the vehicle, and vehicle status data, determined by further sensors 415, such as velocity, acceleration, and status of major system components (throttle position brake status, steering position etc.) can be transmitted via antenna 1203. Moreover, a transmission to several external sites, including fixed an movable, is also possible.

A display 1204 arranged near the position of the driver of the vehicle is used to display, inter alia, notifications to the driver, received from the remote evaluation site, or generated by the environment monitoring system.

A core component of the environment monitoring system according to the present invention is the first processing unit 301, to be explained in more detail below. The data collected by the complex of vehicle sensors 1202, including at least three-dimensional camera 1202a, are all forwarded to the first processing unit 301. The first processing unit 301 processes particular data extracted from the sensor data, in order to generate a three-dimensional environment model.

The three-dimensional vector model generated in the first processing unit is forwarded to a remote location via antenna 1203. Transmission of the three-dimensional vector model to a remote location can be accomplished via radio, via a cellular telephone line or other transmission means that a person skilled in the art is aware of.

In accordance with a preferred embodiment, the environment monitoring system further comprises a second processing unit. The three-dimensional vector model (or, in a preferred embodiment, a sequence of three-dimensional vector models representing a three-dimensional time-and-space model) is forwarded to the second processing unit 303. The second processing unit 303 evaluates the three-dimensional vector model for generating responses based on particular aspects of the information contained in the vector model. Responses generated by the second processing unit 303 include, but are not limited to, driver assistance functions, such as collision warning, distance adaptive speed control, lane keeping support, lane change assistance or automatic emergency braking.

In a further preferred embodiment, vector models generated in the first processing unit 301 are forwarded to an event data recorder (not shown in Fig. 3) for crash investigation and/or other purposes.

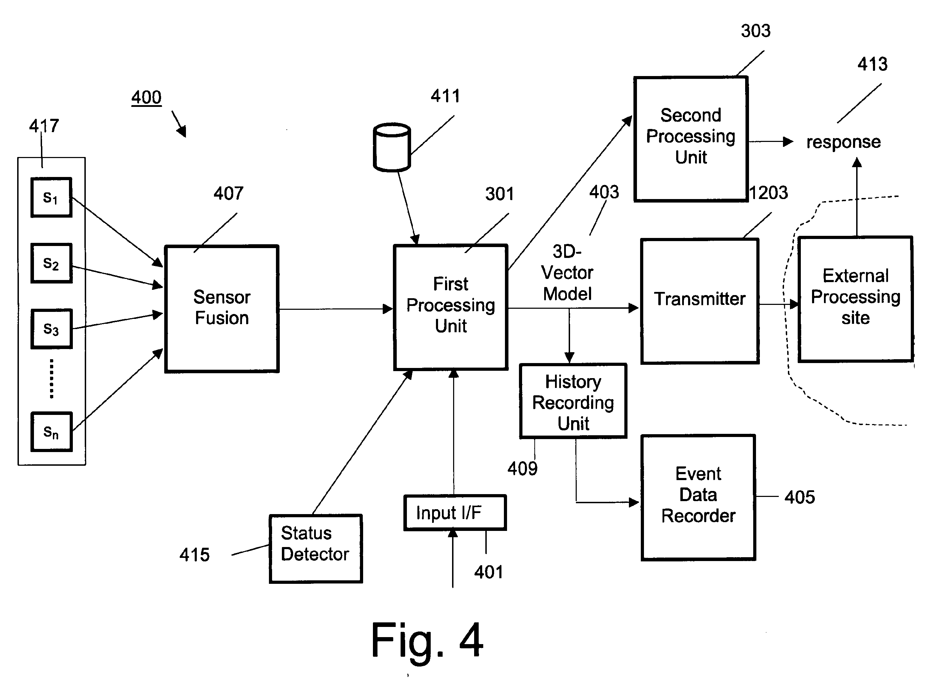

Fig.4 is a block diagram illustrating an overall view of an environment monitoring device in accordance with the present invention. The core element of the environment monitoring system is represented by first processing unit 301 for generating a three-dimensional vector model 403 representing at least a part of the vehicle's environment. First processing unit 301 therefore receives data from a plurality of sensors, referred to as s₁, s₂, s₃, ..., sₙ in Fig. 4. Optionally, environment monitoring system 400 further comprises sensor fusion unit 407. Sensor fusion unit 407 is included to perform sensor fusion processing, if sensor complex 415 includes various sensors of different types.

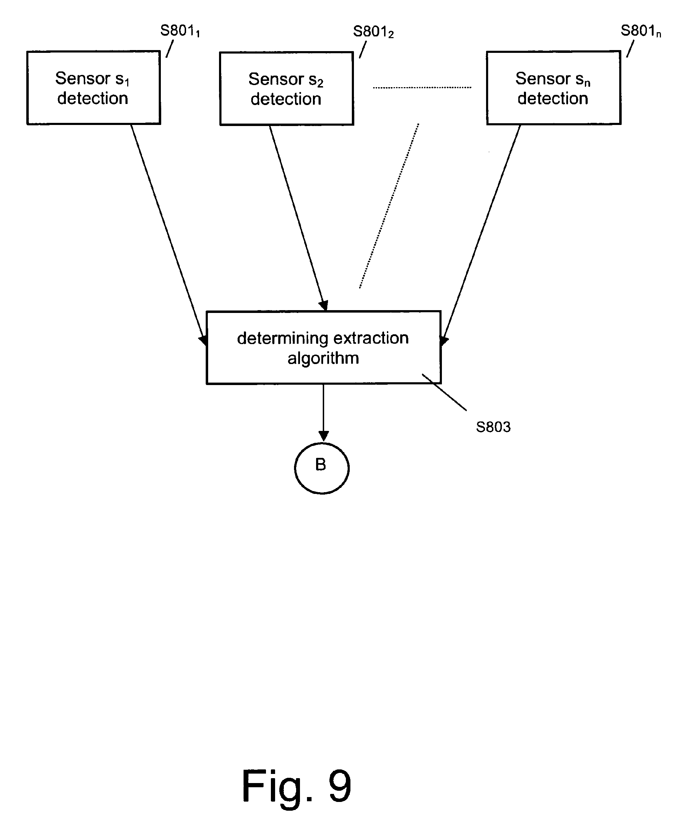

Fig.9 illustrates a concept of sensor fusion that is applied in a particular preferred embodiment of the present invention, wherein data from a plurality of different sensors are taken into account for generating three-dimensional vector models 403. In a plurality of parallel, independent steps S801₁, S801₂, ..., S801ₙ, a plurality of sensors (corresponding to sensor complex 417 of Fig.4) detect data, in accordance with the particular kind of sensors. Specifically, the at least on three-dimensional camera 1202a for capturing an image of the vehicle environment has to be understood as a sensor in the sense of Fig.9. Accordingly, image capturing step S500, is considered as a particular example of detection step S801ₖ (k = 1...n). Subsequent step S803 receives the data detected by the plurality of sensors s₁, s₂,..., sₙ, and performs a fusion of the sensors.

Sensor fusion processing combines sensory data from different sources. Data delivered from different sensors, attached to the vehicle are transformed into normalized environment information data in sensor fusion unit 407. During sensor fusion, information obtained from different sensors of sensor complex 417 are combined in a manner that includes optimization, so that the data set resulting from sensor fusion is improved compared to a pure agglomeration of the data of the individual sensors. Specifically, sensor fusion includes a redundancy check of the information received from different sources, as well as a check for inconsistencies. In the case of detected inconsistencies, a probabalistic approach is generally employed to eliminate the inconsistencies. A person skilled in the art is aware of a plurality of methods and algorithms used in sensor fusion, including, but not limited to Kalman filtering and Bayesian networks. In particular, in the case of plural three-dimensional cameras, together covering an environment range around the vehicle, the result of the sensor fusion contains a synthesized camera scene of the environment surrounding the vehicle 1201.

A more detailed internal view of first processing unit 301 is illustrated in Fig. 5. As shown in Fig. 5, the first processing unit 301 comprises determining unit 501, data extracting unit 503 and model generation unit 505. Data extracting unit 503 operates to extract particular data out of the full amount of data received from the three-dimensional camera, and optionally from further cameras and/or other sensors (a sensor fusion result in the case of sensor fusion). Only that part of data that is extracted by data extracting unit 503 is forwarded to model generation unit 505, and forms the basis for generating three-dimensional vector model 403. Data that are not selected for extraction by data extracting unit 503 are discarded and not further processed in first processing unit 301.

In first processing unit 301, according to the present invention, the algorithm for extracting data in data extracting unit 503 is not static, but depends on the vehicle situation at the moment of generating the model. In order to determine a situation dependent data extracting algorithm 503a, first processing unit 301 includes determining unit 501. Determining unit 501 determines a particular data extracting algorithm to be employed by data extracting unit 503 on the basis of determining the current vehicle situation. The vehicle situation is characterized by one or a plurality of parameters, including those describing internal conditions and events of the vehicle, the vehicle's motion status and environmental conditions and events in an area surrounding the vehicle. Parameters characterizing the vehicle situation can be obtained from the sensor data received by first processing unit 301 themselves, including three-dimensional images, and/or sensor fusion data. Furthermore, in preferred embodiments determining unit 501 receives additional information from other sources, such as status detectors 415 and input interface 401, shown in Fig. 4. The status detectors 415 may include a plurality of sensors detecting information about the status of the vehicle itself, such as velocity sensors or accelerometers, brake status sensors, as well as cameras and sensors for detecting the occupation of seats of the vehicles with people and their behaviour, seatbelt and airbag status. Data received via input interface unit 401 may include user defined data, such as defining a particular operation mode of vehicle environment monitoring system, requiring a particular data extraction algorithm 503a to be applied by data extracting unit 503.

On the basis of the data extracted by data extracting unit 503, model generation unit 505 generates three-dimensional vector model 403. In a three-dimensional vector model, objects of the real world are represented by way of points, lines and areas. Points are represented by their co-ordinates with respect to a definite co-ordinate system. In accordance with the present invention, preferably a coordinate system fixed to the vehicle is employed for the vector model. Coordinates of a point with respect to the point of origin of the coordinate system are called a "vector". In the vector model, (straight) lines are defined by the vectors defining their end points. Areas are defined in the vector model by a plurality of lines, forming a polygon.

It is evident from the general definition of the vector model that the amount of data, and therefore the required memory resources, basically depend upon the accuracy for representing lines and areas in the vector model. Therefore, the general task to be solved in creating vector model 403 is to determine an optimal trade-off between data amount and model accuracy. As indicated above, the data amount required to represent the vector model is closely related to processing time for generating and further processing vector model 403, as well as required storage capacity, for instance, in an event data recorder, such as event data recorder 405 shown in Fig.4.

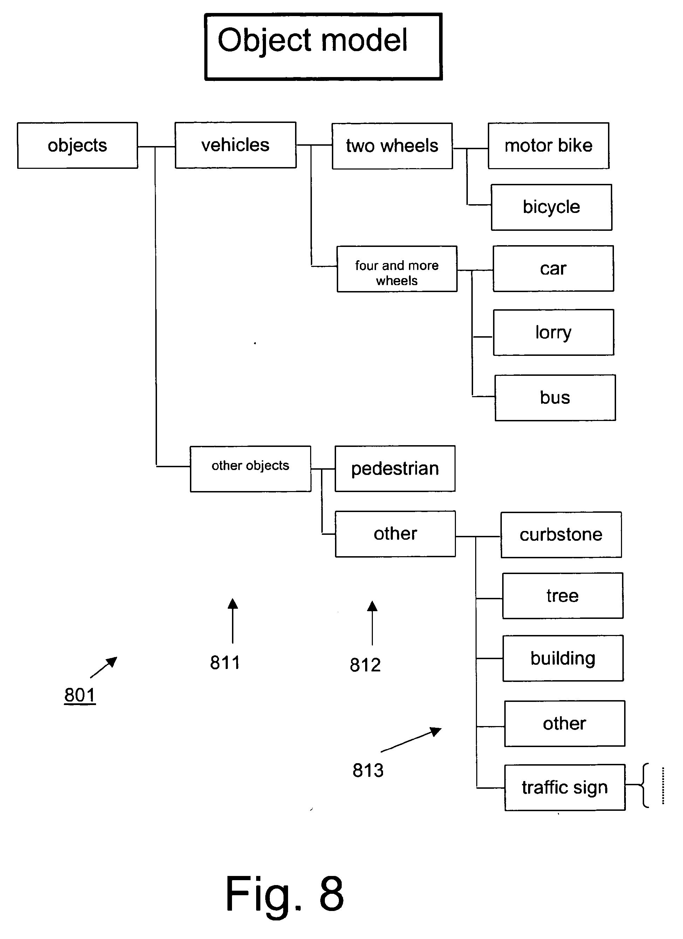

Additionally, the vector of a vector model can be associated with object information of a standard object represented by the vector. Standard objects are objects of predefined classes of an object model, to be described later with reference to Fig.8.

By employing object information including a reference to a standard object class, extended objects comprising a plurality of points, lines and areas can be approximately described by way of only a few vectors, defining, for instance, a particular point of the object, as well as object size and orientation with respect to the particular point. Further information representing, for instance, the shape of the objects predefined in the object model, is stored in association with the standard object class. In order to associate a vector of the vector model with object information of a particular object class of an object model, the first processing unit 301 is associated with database 411. Database 411 pre-stores object information, in accordance with an object model of a preferred embodiment of the present invention.

A person skilled in the art is aware that the amount of information that can be represented by an object model, including object information such as color information, or information about texture of an area, is limited only by the available storage and processing capacity.

For further processing, 3-D vector model 403 generated in first processing unit 301 is forwarded to an external (remote) location (separated from the components included in environment monitoring system 400 by a dashed line). Depending on the particular purpose for employing a system according to the invention, a response signal 413 may be remotely generated and retransmitted to the vehicle. Response signal 413 may be employed for driver assistance, taking active and passive countermeasures in case of a threatening accident and further purposes, to be described in detail below.

In accordance with an embodiment, the system of the invention further includes second processing system 303 for performing certain evaluation functions of the 3D-vector model on board the vehicle and defining a response.

Response 413 generated at an external site may include instructions that directly interfere with core functions of a vehicle, for assisting or replacing a driver (remote control). Alternatively, or in combination, response 413 also may include evaluation results that need further processing within the second processing unit 303 at the vehicle, in order to generate instructions directly interfering with vehicle driving.

Alternatively, or in parallel, data of three-dimensional vector model 403 can be saved in event data recorder 405. The storing processing of the three-dimensional vector model 403 is controlled by history recording unit 409.

A person skilled in the art is aware that the further processing of the three-dimensional vector model 403 generated by first processing unit 301 is not limited to the foregoing examples. Moreover, several procedures of further processing can be employed in parallel, or subsequently, or alternatively, by a particular environment monitoring device. A person skilled in the art is moreover aware that the described functional units can be represented by specific hardware units, as well as by circuitry including standard components, such as a CPU, RAM etc., appropriately programmed by a program instructing the hardware components to operate in accordance with the present invention.

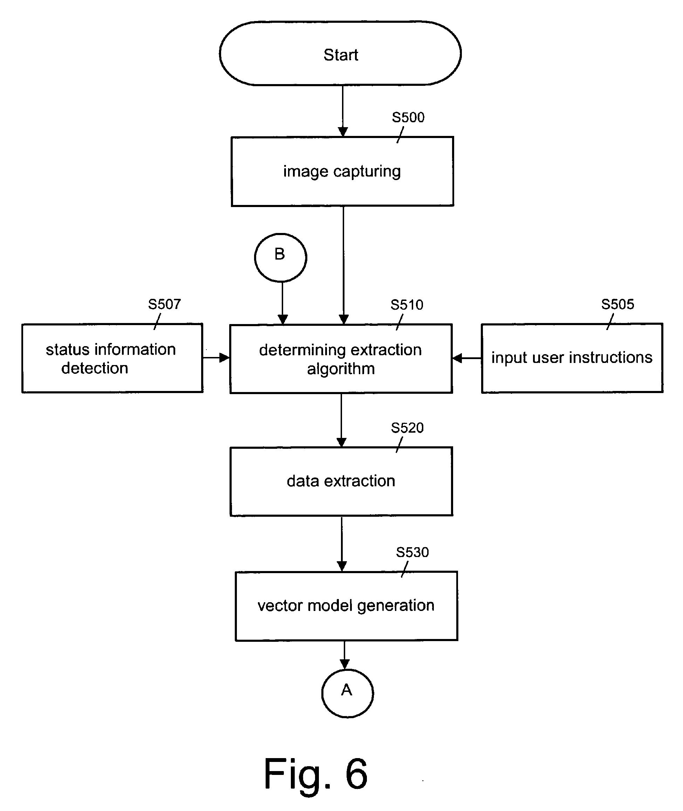

Fig. 6 is a flow chart illustrating a basic processing step of a method performed by an environment monitoring device of a vehicle in accordance with the present invention. In a first step (S500), at least one image is captured by a three-dimensional camera. As indicated above, "three-dimensional camera" herein includes different kinds of devices, such as a conventional three-dimensional camera having two optical systems, as well as a camera comprising a time-of-flight sensor.

Subsequent step S510 determines an extraction algorithm for extracting data from the captured image, in order to reduce the amount of data to be processed for generating a three-dimensional vector model. A single or a plurality of parameters that describe the situation of the vehicle are employed for determining an extraction algorithm. Step S510 can extract parameter information from a captured image itself, as well as from other sources. Other sources include the result of step S507 of detecting status information. Status information detected in step S507 and employed by extraction algorithm determining step S510 can include, for instance, a vehicle velocity. Vehicle velocity is an example of a parameter that can be used to determine an extraction algorithm 503a, as vehicle velocity influences the desired accuracy, visual angle and distance of the information to be represented by the three-dimensional vector model 403.

Alternatively, the extraction algorithm determining step S510 can employ user instructions input in step S505 as a parameter for determining a particular extraction algorithm. User instructions in S505 may include a selection between different operation modes of the environment monitoring device, in accordance with particular positions of a switch etc., wherein a parameter value determining an extraction algorithm is represented by a signal indicating the particular switch position of an input unit 401.

A parameter for determining an extraction algorithm based on captured image information itself, is represented by information regarding a specific object class, such as a person occurring in the vehicle's environment. If a person suddenly occurs in the vehicle environment, the data extraction algorithm has to concentrate on the information of the person and the surrounding area, in order to determine whether the person is about to interfere with the driving path of the vehicle, by evaluating subsequently generated three-dimensional vector models.

Further examples for employing image information for deciding a data extraction algorithm include judging the importance of particular information. For instance, in the case of driving in a town, an object that is recognized as a traffic light can be marked as to be extracted with high priority.

It is to be further noted that along with pure image information, or alternatively, extraction algorithm determining step S510 can also receive a sensor fusion result described below with reference to Fig.9, as indicated by item B in Fig. 6.

In accordance with a particular embodiment of the present invention, step S510 may determine an extraction algorithm by adjusting a parameter of an algorithm that includes variable parameters. Alternatively, or in combination, S510 can determine a particular data extraction algorithm by selecting out of a predetermined plurality of different data extraction algorithms.

Subsequent step S520 performs data extraction in compliance with the data extraction algorithm determined in step S510. Data extraction algorithms can include, but are not limited to image filtering on the basis of adjustable filter parameters, determining a part of the visual angle of a camera as a basis for extracting data, and extracting data only from particular ones of a plurality of cameras/sensors. Moreover, data extraction can be performed on the basis of object recognition. If an object is recognized that belongs to a particular object class pre-stored in an object model contained in database 411, data to be extracted from an image can be limited to the extraction of an overall position, size and possibly orientation information from the image. Up to a certain accuracy, the remaining information can be extracted from the standard object model, but does not need to be processed directly from the image. Still alternatively, the extraction of image information can be restricted to a particular range surrounding the vehicle, in order to achieve an enhanced model accuracy within a limited range, while disregarding undesired information outside the limited range. For instance, in the case when the environment monitoring system is operated for a parking assistant, quite accurate information is desired of a particular portion of the vehicle's environment, namely the parking site and surrounding objects, such as other vehicles, walls, trees, traffic signs, and possibly people. However, more distant objects can be disregarded, even if they are captured by the camera. The examples given above show that, according to the present invention, a basis of data for generating a vector model is created situation dependent and targeted at the goal to be achieved by further processing three-dimensional vector model 403.

As indicated above, a PMD-based TOF-camera is preferably employed for the present invention. In a particular preferred embodiment, a PMD sensor array of m x n (for instance: 16x64) infra-red sensitive pixels is employed, each of which registers a distance value corresponding to the incident light.

In particular, such a PMD sensor does not only recognize a thus generated image of distances, but is moreover capable of recognizing predetermined objects and return the objects to a processing device reading out the sensor. Such objects are represented by groups of pixels of same distance which are calculated in the sensor itself.

Three-dimensional vector model 403 is generated in subsequent vector model generation step S530. Creating a vector model on the basis of data extracted from an image generally is based on recognizing discrete physical objects from the image data. Objects of an image are generally distinguished by a zone, wherein all pixels of similar colour or grey scale values. On the other hand, object boundaries correspond to portions in an image wherein pixel values change abruptly. Before tracing the outline of objects, preferably spatial filtering algorithms are applied to the image so as to compensate for noise effects etc. Subsequently, the vectors representing vertices, lines, and boundary surfaces of an object are determined for the vector model.

If the vector model further includes object specification information associating an object with a standard object class of an object model, step S530 further includes recognizing that a physical object detected from the image information represents an instance of a particular object class. If it is detected that an object represented in the image to be reflected in three-dimensional object model 403 belongs to one of the standard classes of an object model, that are, for instance, pre-stored in database 411, a vector representing a particular point (for instance, a vertex) of the object is associated in step S520 with object specification information of the particular object class. In the case of extended objects, coordinate vectors of the particular point are preferably associated with further information, indicating, for instance, an orientation and overall size of the object. The additional information can be represented by further vectors, such as a vector indicating the overall perimeter of the object, or an orientation angle of the object with respect to the coordinate axes. Regarding object dimensions, a particular object class may alternatively include sub-classes corresponding to objects of the same main class, but having different sizes.

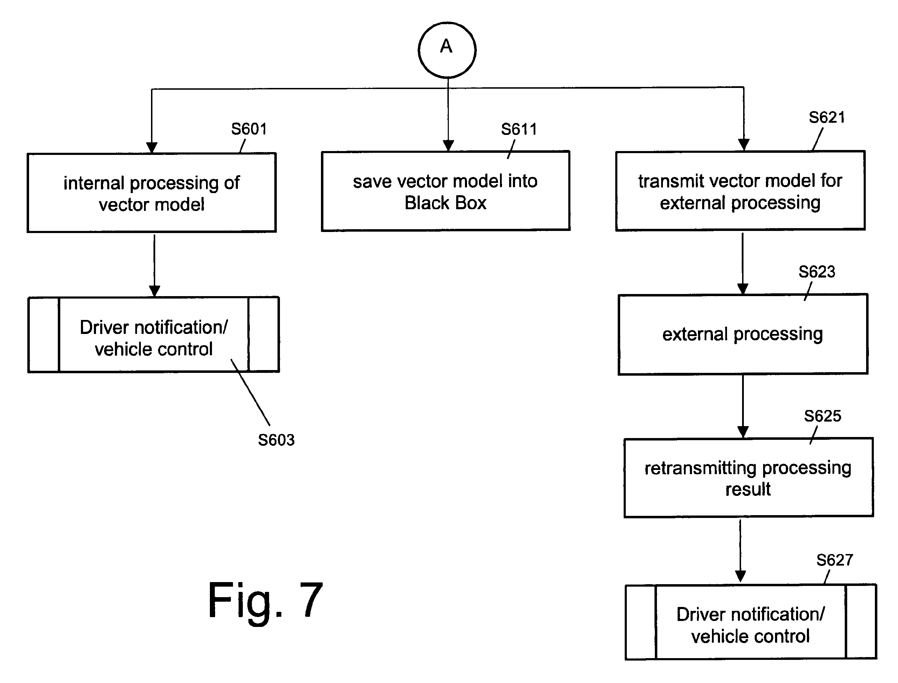

Steps of further processing three-dimensional object model 403 generated in step S513 in accordance with the present invention are illustrated with reference to Fig. 7. A link between Fig. 6 and Fig. 7 is given by item A in Figs. 6 and 7.

Fig.7 illustrates a plurality of further processing paths for the three-dimensional object model generated in accordance with the present invention as described above.

The main further processing path according to the present invention, based on the step (S621) of transmitting the vector model to a remote location, is illustrated on the right hand side of Fig. 7.

In step S621, vector model 403 generated at step S530 by first processing means 301 is transmitted by an antenna 1203 to an external site, located remotely from the vehicle 1201.

Preferably, transmission is performed over a standard transmission channel, such as radio or a cellular telephone line. However, means of transmitting the vector model to the external location are not limited to these, but any transmission technique available at present, or in the future can be employed. The way of transmission is not essential for the present invention. Preferably, a sequence of vector models 403, representing a three-dimensional space-and-time model is transferred.

In subsequent step S623, the transmitted vector model 403 undergoes external processing. External processing is preferably performed by a computer system provided at the external location. Various kinds of external processing can be performed in accordance with embodiments of the present invention including those which are generally similar to the processing evaluation that can be performed internally in step S601 described below by second processing unit 303. In an embodiment of the present invention, external processing performed at step S623 also includes rendering the information from vector model 403 for display at an external computer.

Thereby, a facility such as a traffic control center may be informed about extraordinary events, such as accidents or beginning traffic jam in quasi-real time. Besides taking automatic countermeasures by activating automatic traffic management systems, the visualization in real time also considerably simplifies processes of traffic situation analysis by staff of a traffic control center, possibly resulting in manual interference.

A remote location, where external processing is performed is preferably a stationary location. However, also evaluation at a mobile location, such as a specialized vehicle, is not excluded. Since computer systems available at a stationary location are generally more powerful than the specialized processing units available on board the vehicle, more sophisticated processing procedures can be performed at the remote location. Thereby, a response can be generated in quasi-real time. The real time requirements can be particularly fulfilled in view of the possibility of transmitting the processing data by a channel having a limited bandwidth, in the form of the vector models 403 having specifically reduced data volume.

At step S625, a processing result from external evaluation is re-transmitted to the vehicle. Preferably, for re-transmission the same transmission medium is used, as for transmission of vector model 403 from vehicle 1201 to the remote location.

On the basis of the processing result re-transmitted in step S625, remote control of the vehicle can be achieved (step S627). The processing result is transmitted at step S625 to vehicle 1201 in form of data representing processing results that have to be interpreted in step S627 at the vehicle for vehicle control. A person skilled in the art is aware that alternatively a signal for vehicle control can be directly generated at the remote location, and be transmitted to the vehicle so as to be directly used by a specifically adapted control unit located at the vehicle.

It is further noted that transmission of vector models 403 from vehicle 1201 to a remote location is not limited to the example explained above. Transmission of vector model information can be used for various other purposes and objects, including visualisation at an external computer, for instance, in order to watch drivers undergoing training in a closed training area from a central site by a single instructor. Another area of application of a vector model 403 in accordance with the present invention, transmitted to a remote location is immediate notification of accidents or other extraordinary events occurring with specialized vehicles, such as VIP cars, to a central instance.

It is noted that additional processing paths, as described below in connection with Fig. 7 are not limited to these, but explained herein merely by way of example. It should also be noted that in different embodiments either a single, of the illustrated additional processing paths can be applied, as well as a combination thereof, in parallel or subsequently. However, in a basic implementation, only the single, transmission-based processing path as illustrated on the right hand side is enabled. It should be further understood that while further processing of a single vector model is generally possible, however, in a preferred embodiment a sequence of three-dimensional vector models representing a development of the vehicle's environment with time (three-dimensional space-and-time model) undergoes the described further processing.

According to the processing path illustrated on the left hand side of Fig. 7, three-dimensional vector model 403 is forwarded to second processing unit 303. In step S601, second processing unit 303 performs vehicle internal further processing of the vector model. According to a preferred embodiment, internal further processing of three-dimensional vector model 403 performed by second processing unit 303 in step S601 includes, but is not limited to an evaluation of distances between vehicle 1201 and other objects. Preferably, changes in the distances between vehicle 1201 and other objects with time are evaluated in a sequence of three-dimensional object models, in order to detect at an early stage a possible emergency situation, such as a threatening collision. If the threatening emergency situation is detected at an early stage, appropriate counter-measures can be taken in order to either avoid it or to minimize the consequences. Particularly effective response measures can be taken upon evaluation of three-dimensional vector model 403, if the vector model further includes object specific information on the basis of an object model. Thus, specifically adapted measures can be taken in response to changes in a vector model with time concerning, for instance, a person being about to interfere with the driving path of the vehicle, a sudden distance change between vehicle 1201 and other vehicles being driven in the same direction, such as those changing from a parallel lane into the driving lane of the vehicle 1201, or to avoid a collision with a static object such as a tree. It is emphasized that the processing steps that are described above with respect to step S601 can generally be performed externally in step S623 of the main processing path.

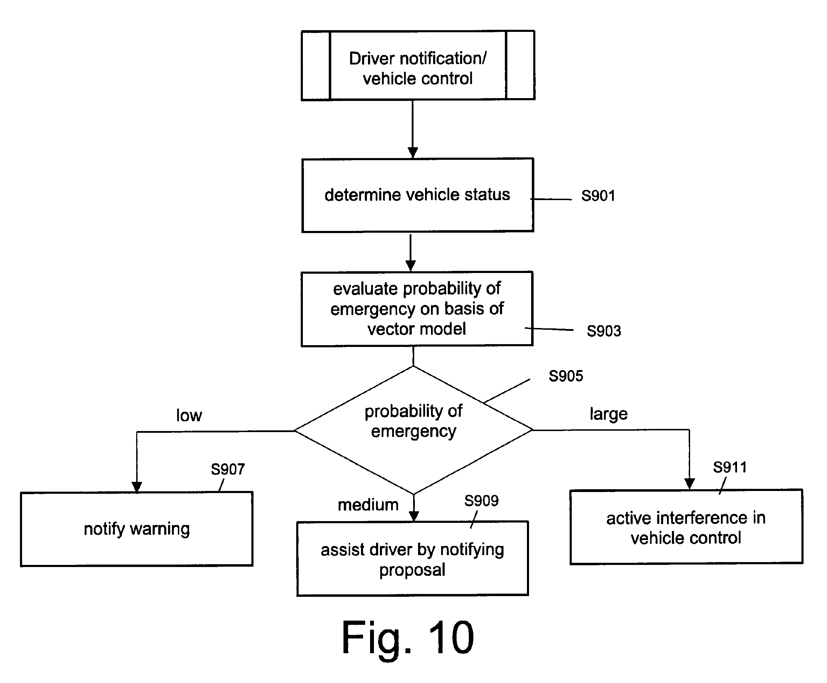

In Fig. 7, possible countermeasures taken in response to further evaluation of three-dimensional vector model 403, or a sequence thereof, are summarized in steps S603 and S627. An implementation example of step S603 or S627 is described below in more detail, in connection with Fig. 10.

In step S901, the vehicle status is determined on the basis of vehicle status information. Vehicle status information is preferably received from vehicle status detectors, such as those described above in connection with item 415 of Fig. 4. In subsequent step S903, the probability of a threatening emergency situation is evaluated. According to the preferred embodiment, evaluation in step S903 takes into account vehicle status information obtained in steps S601 or S623, together with the environment information extracted from the three-dimensional vector model (preferably: a sequence of three-dimensional vector models) in further processing step S601 or S623. Subsequent judging step S905 decides whether the probability of an emergency is judged to be low, medium or high. It has to be understood that the general judgement results, "low", "medium" and "high", indicated near three illustrated outgoing paths of box S905 correspond to well-defined values, in preferred embodiments. For instance, "low" probability may correspond to a probability less than about 30%, "high" probability to a percentage value of more than about 80%, and "medium" probability to a range from about 30% to about 80%. However, these percentage values are given by way of an example only, as these values are not essential for the present invention. Other boundaries between the processing paths are applicable in embodiments of the invention. Moreover, the number of processing paths judged in step S905 is not limited to three. More than three processing paths are applicable within the present invention, as well as an embodiment with only two processing paths outgoing of step S905.

According to the particular embodiment illustrated in Fig.10, the processing flow further develops to step S907 in the case of low, to step S909 in the case of medium, and to step S911 in the case of high probability of an emergency to be expected. In the case of low probability of emergency, the environment monitoring device issues a notification to the driver of a vehicle including a warning regarding the threatening emergency situation. The notification can be issued in various ways. Preferably, an acoustic signal is issued, or a notification is displayed on a display device located within the field of view of the driver. Issuing the notification in the form of a display is advantageous, as details of the threatening emergency can be provided in an especially easy manner. An acoustic warning is advantageous as it safely notifies even an inattentive driver. However, also an acoustic notification can be made distinctive, by employing several different sounds, or a combination of acoustic and visual notification is possible.

In the case of medium probability of an emergency, at step S909, a notification is issued that comprises some more specific assistance to a driver. The assistance may include, for instance, a proposal for a measure to be undertaken to avoid a collision. Corresponding measures include, for instance, to reduce speed, or to change lane by slightly varying the steering direction. Step S911, applied in the case of a high probability of emergency in accordance with the embodiment illustrated in Fig. 10, actively interferes with the vehicle control. Therefore, second processing unit 303 generates a signal to be forwarded to a controller (not shown in Fig. 4). The controller interprets the signal in order to carry out active measures in compliance with the signal information. For instance, an emergency braking can be triggered in order to avoid a rear-end collision accident.

However, the range of response actions to information retrieved from evaluation of a three-dimensional vector model (three-dimensional space-and-time model) is not limited to the examples given above. A large variety of other responses is possible. For instance, so-called passive countermeasures can be carried out, such as airbag control, seatbelt control and pedestrian protection control. For instance, internal safety systems of a vehicle such as seatbelts and airbags generally undergo irreversible processes if fully deployed. Accordingly these safety systems have to be replaced in the case of full deployment, even if a threatening accident still could have been avoided, and therefore the vehicle itself has not been damaged. It is therefore advantageous to perform some reversible pre-processing of vehicle safety systems, such as deployment of reversible seat belt pretensioners, in case an accident occurs with a certain probability, in order to minimize full deployment time, if the accident occurs, but not to irreversibly damage the safety systems in case the accident still could be avoided. For instance, in accordance with the scheme of Fig.10, reversible seatbelt pretensioners can be deployed, if step S905 judges a medium probability of impact, while the seatbelt is irreversibly locked, if step S905 judges a high probability.

An example of a pedestrian protection control system relying on information evaluated from the three-dimensional vector model in accordance with the present invention is given below. The exemplary pedestrian protection control system includes an active system that increases the attack angle of the engine hood (bonnet) of the vehicle in order to lessen the consequences for a pedestrian in the case of a collision with the front of the vehicle. A prerequisite is that a situation, wherein a pedestrian threatens to collide with the front of vehicle, is clearly detected and evaluated by the environment monitoring system in accordance with the present invention.

Returning to Fig. 7, in accordance with the path in the central position of the figure, in step S611 a vector model 403 generated in first processing unit 301 in accordance with the present invention is saved into event data recorder 405 (also known as "black box"). Preferably, a sequence of vector models is saved. The saving processing ins controlled by the recording unit 409.

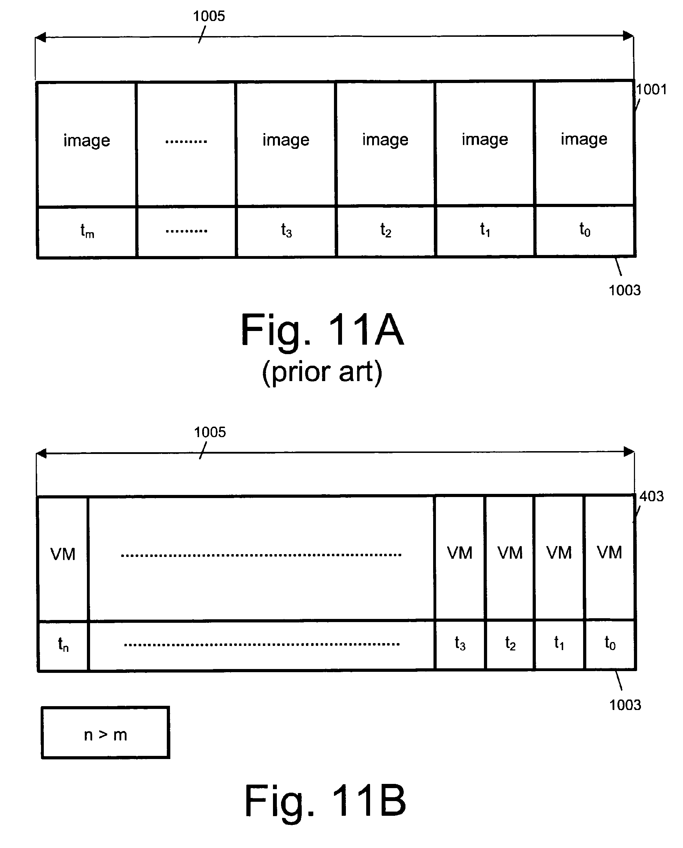

An event data recorder 405 saving a sequence of three-dimensional vector models 403 generated in accordance with the present invention represents an advantageous alternative to a conventional black box that saves sensor data, in particular, raw video data in case of a camera equipped vehicle. On the one hand, the sequence of three-dimensional vector models according to the present invention that is generated independently of the event data recorder, for other purposes, such as driver assistance and/or safety countermeasures, includes all important parameters necessary for reconstruction of an accident. These parameters include, but are not limited to size, kind, speed, direction and distance data of all objects over space and time relative to the vehicle. On the other hand, in view of the fact that a three-dimensional vector model 403 includes only extracted data that has been extracted by a data extraction algorithm determined in accordance with the present invention, a considerably increased spatial and semantic density is achieved compared to a conventional event data recorder, saving complete raw video scenes. Accordingly, while, in accordance with the present invention, for every instant of time, much less storage capacity than in a conventional event data recorder is required in order to store the relevant data for the construction of an accident, for a given overall storage capacity, the history time period available for accident reconstruction ("history depth") can be considerably increased. A comparison of the history depth between a conventional camera-based event data recorder and an event data recorder in accordance with an embodiment of the present invention will be described below in connection with Fig.11A and 11B.

Fig.11A schematically illustrates a storage medium of a conventional event data recorder. The overall width of the scheme, indicated by double-sided arrow 1005 corresponds to the fixed overall storage capacity of the event data recorder. A sequence of images 1001, captured by at least one camera at predetermined instants of time 1003 is subsequently stored in respective portions of the storage medium with time stamps indicating the predefined instants of time 1003. For simplicity of illustration, only a single image is indicated to be stored for each instant of time. However, the prior art event data recorder as illustrated is not limited to the case of a single image to be stored, but a plurality of images captured by different two- and/or three-dimensional cameras can be stored, possibly together with data received from other sensors, at every instant of time as well. Time stamps to, t₁, t₂, t₃, ..., tₘ indicate time instances 1003 in increasing manner, i.e. so that to < t₁ < t₂ < t₃ < ... < tₘ. Preferably, time instances for saving the images are chosen to be equidistant. The overall number of subsequent images that can be stored in an event data recorder as illustrated in Fig. 11A is given by overall storage capacity 1005. Namely, if the first image has been stored at time instance to, and the overall storage capacity 1005 has been reached after storing the image at time instance tₘ as indicated in Fig.11A, a total of m+1 images can be stored. Referring to the time scale, the difference between the first and the last image to be stored, i.e. the history depth as defined above, corresponds to the time difference between the last and the first time instance, i.e. tₘ - t₀.

Fig.11B schematically illustrates a storage medium of an event data recorder, wherein a sequence of vector models 403 in accordance with the present invention are stored. The overall storage capacity 1005 of the storage medium is assumed to be the same as in a conventional storage medium of Fig. 11A. In contrast to the example of Fig.11A, in the event data recorder of Fig.11B, for every time instance 1003, a corresponding vector model 403 is stored, rather than a single or a plurality of raw image data 1001 corresponding to the respective time instances 1003. As indicated above, the required storage volume per time instance is considerably lower in the case of vector model 403, and in the case of raw image data 1001. Accordingly, data of larger number time instances can be stored in the storage medium in accordance with the present invention, as compared with the conventional case. In the example of Fig.11B, for simplicity, it is assumed that the same time intervals between time instances for storing (preferably equidistant) are employed than in Fig.11A above.

Consequently, the number of vector models 403 that can be stored for the same overall storage capacity 1005 is larger than the number of images 1001 that can be stored in the conventional event data recorder of Fig.11A. The respective relationship is illustrated by inequality n > m in Fig.11B, wherein tₙ being the instance of time for the last vector model that can be stored within storage capacity 1005, after storage has been started at time instance t₀. In the illustrated case of equidistant time instance, consequently, history depth tₙ - to of Fig.11B is larger than history depth tₙ - to of Fig.11A.

An possibility to further reduce the amount of data consists in additionally applying software compression algorithms such as MPEG. In particular, objects which remain included in the 3D environment over time can be reduced along the time line in that not each image needs to include the whole information about the object. In each subsequent image, a reference to an initial image comprising the whole information about the object would be sufficient.

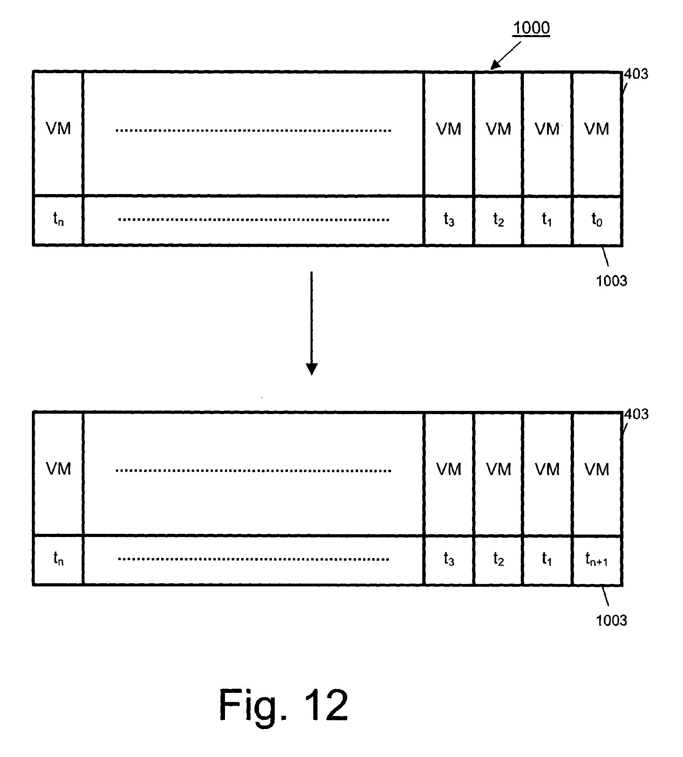

Fig.12 illustrates a concept of cyclically overwriting entries in the storage of an event data recorder storing vector models 40 in accordance with the present invention. Event data storage 1000 corresponds to the data storage as illustrated in Fig.11B. However, for simplicity, the double arrow 1005 indicating the overall storage capacity has been omitted in Fig.12. The scheme on top of Fig.12 corresponds to the situation as illustrated in Fig.11B. n + 1 vector models 403, corresponding to time instances to to tₙ, have been stored in the storage. Accordingly, no free space is available for storing the next vector model to be stored, at time instance tₙ₊₁. In other words, the maximum available recording time (history depth) has been reached. As indicated by the arrow between the top and bottom scheme of Fig. 12, at a time point tₙ₊₁ vector model 403 having the earliest time stamp, to, is deleted and the respective storage portion is occupied by vector model 403 with time stamp tₙ₊₁. In other words, at time tₙ₊₁ the vector model having time stamp to is overwritten by the vector model with time stamp tₙ₊₁. Accordingly, the overall number of stored vector models, and at the same time, under the assumption of equidistant time stamps, the history depth remains constant: tₙ₊₁ - t₁ = tₙ - to = n(t₁ - t₀).

It has to be noted that the concept of cyclically overwriting the vector models stored in the data recorder 405 is applied, as long as no emergency situation is registered. In the case of an emergency situation, such as an accident leading to an impact being detected, history recording unit 409 receives the signal to immediately stop further recording. Consequently, it is guaranteed that in the case of an accident really occurring, history information in the form of vector model 403 is always available for a time period corresponding to history depth tₙ - to, immediately before the occurrence time of the accident.

A problem may occur, if the sensor does not properly recognize an object such that the 3D vector model is incomplete or wrong. The problem may be reduced by including an additional, very small ring buffer which stores few images directly from the video cameras (for instance only every 2 to 5 seconds), in addition. These images could be employed for verifying the vector model. Since the additional buffer is very small, the data reduction is still considerable as compared to a conventional black box that is not based on the vector model.

Fig.8 illustrates the overall structure of an object model 801 that is employed for generating vector model 403 in accordance with an embodiment of the present invention. Object model 801 classifies a plurality of objects in the form of a hierarchically arranged tree-like structure into classes and sub-classes. Each class and sub-class correspond to a particular level of the hierarchical tree structure. In Fig.8, three levels of an object model are shown for illustration. The example of object model 801 illustrated in Fig.8, and in particular, the number of illustrated levels are only given by way of example, and are not intended for limitation. Every object class/sub-class on a particular level is associated with object classification information. The object classification information indicates that a particular object has to be distinguished from objects belonging to other classes at the same hierarchical level. Examples of object information for three object class levels are given in the boxes in Fig. 8.

Fig.8 illustrates an example of an object model, having hierarchical object classification that is particularly adapted to objects occurring in a vehicle's environment, that are most likely to be captured by a three-dimensional camera, such as camera 1202a, mounted on a vehicle. If an object that is present in a captured image has been recognized as belonging to an entity of the object classes on a particular level, a vector describing the respective object in the vector model is associated with the corresponding object classification information. The object classification information preferably serves as a pointer to data representing characteristic features of all objects of the respective class, that are available at the database, and can be accessed when processing the respective object indicated by the vector model.

The information contained in the vector model can thus be rendered more detailed by increasing the number of levels of the object model. In accordance with the increasing number of sub-classes with a larger amount of levels, more and more detailed information can be provided to be accessed from the vector model, in compliance with the classification information of an object described by single or a plurality of vectors. On the other hand, the amount of information (reflected by a corresponding data volume) increases with an increasing number of hierarchical levels as well. Therefore, on the basis of the hierarchical level of the model, a trade-off between information content and data volume can be easily achieved by extending or restricting the number of hierarchy levels, depending on the current situation.

In the case of the object model of Fig. 8, at the first hierarchy level 811, all objects are classified into vehicles and other objects. On second hierarchy level 812 of the illustrated object model, each class of level 1 is sub-divided into two sub-classes. Namely, the class of vehicles comprises sub-classes of two-wheeled vehicles, and of vehicles having four and more wheels. The class of all other objects is sub-divided into a sub-class of pedestrians, and a sub-class of all other objects.

A more detailed description of objects is enabled, if a vector model additionally includes information relating to object classification on the third hierarchical level 813. However, it is not necessary for a particular class or sub-class of a specific level to be further sub-divided on the next level. For instance, the sub-class of pedestrians of second level 812 is not further sub-divided on third level 813. The other exemplary sub-classes of second level 812 are further sub-divided, wherein the number of sub-classes of third level 813 varies. Namely, the exemplary sub-class of two-wheeled vehicles is sub-divided twice into the third level sub-classes of motorbikes and bicycles. The second level sub-class of vehicles with four and more wheels is sub-divided into the three third level sub-classes of cars, lorries and buses. The second level sub-class of other objects is sub-divided into five third level sub-classes, of curbstones, trees, buildings, traffic signs and other objects. As indicated on the right hand side of Fig.8, further sub levels are possible for some or all of the object sub-classes of third level 813. For instance, traffic signs can be classified into fixed traffic signs, and traffic signs with a variable meaning (such as traffic lights).

Although the previous description only illustrates particular preferred embodiments of the present invention, the present invention is not limited to the foregoing illustrative examples. A person skilled in the art is aware that the present invention as defined by the appended claims can be applied in various further embodiments and modifications. In particular, a combination of the various features of the described embodiments is possible, as far as these features are not in contradiction with each other.

In summary, the present invention provides a vehicle environment monitoring device and method that is based on transmitting a three-dimensional vector model generated at a vehicle to an external location. The three-dimensional vector model of the vehicle's environment is generated on the basis of the image data captured by at least a three-dimensional camera. Out of the image data, particular data are extracted for generating the three-dimensional vector model in order to reduce the data volume and thus the bandwidth requirements for transmission. Possible applications of the transmitted vector model include, but are not limited to driver assistance, external monitoring and vehicle control, as well as overall traffic monitoring and control. Preferably, a sequence of three-dimensional vector models, representing a three-dimensional space-and-time model, is generated and transmitted.

## Claims

1. A method of monitoring the environment of a camera-equipped vehicle (1201), comprising the steps of:
capturing (S500) a 3D-image of the environment of the vehicle (1201), the 3D-image representing a predetermined area of the vehicle environment,
reducing the amount of information acquired in said image capturing step by extracting (S520) data from said 3D-image employing a data extraction algorithm;
generating (S530) a 3D-vector model (403) of the vehicle environment from said data extracted from said 3D-image, and
transmitting (S621) the 3D-vector model (403) to an external location with respect to said vehicle (1201).

2. A method according to claim 1, wherein said 3D-vector model (403) is transmitted by radio.

3. A method according to claim 1, wherein said 3D-vector model (403) is transmitted via a cellular telephone line.

4. A method according to any of claims 1 to 3, wherein said 3D-vector model (403) being transmitted for visualizing on an external computer.

5. A method according to any of claims 1 to 4, further comprising the step of evaluating (S623) said 3D-vector model (403) at an external computer.

6. A method according to claim 5, further comprising the step of retransmitting (S625) results of said evaluation (S623) back to the vehicle (1201).

7. A method according to claim 5 or 6, further comprising the step of remotely controlling (S627) the vehicle (1201) by employing the evaluation results.

8. A method according to any of claims 1 to 7, wherein said external location being a stationary location.

9. A method according to any of claims 1 to 8, wherein said transmitting step (S621) transmitting a sequence of 3D-vector models (403) representing a 3D-space-and-time model.

10. A method according to any of claims 1 to 9, further comprising the step of determining (S510) the data extraction algorithm to be employed in said reducing step based on at least one parameter characterizing the vehicle situation.

11. A method according to claim 10, wherein said extraction algorithm determining step (S510) determining the data extraction algorithm to be adapted to the processing time available for generating the 3D-vector model (403).

12. A method according to claim 10 or 11, wherein said extraction algorithm determining step (S510) determining the data extraction algorithm to be adapted to the required information content of the 3D-vector model (403).

13. A method according to any of claims 1 to 12, wherein said data extraction algorithm including object recognition.

14. A method according to any of claims 1 to 13, wherein said data extraction algorithm including a step of filtering of the captured 3D-image.

15. A method according to any of claims 1 to 14, wherein said data extraction algorithm extracts data only from a part of the 3D-image corresponding to a certain visual field.

16. A method according to any of claims 1 to 15, further comprising the step of further processing (S601, S623) said 3D-vector model (403) for assisting (S603, S627) a driver in controlling the vehicle (1201) based on the processing result.

17. A method according to claim 16, wherein said extraction algorithm determining step (S510) includes the step of determining a maximum available amount of time for performing said steps (S530, S601) of generating and further processing said 3D-vector model (403) based on the vehicle situation.

18. A method according to claim 17, wherein said extraction algorithm determining step (S510) further taking into account said maximum available amount of time for determining said data extraction algorithm.

19. A method according to claim 18, wherein said extraction algorithm determining step (S51 0) including the step of determining a maximum amount of data to be extracted in correspondence with said maximum amount of time.

20. A method according to claim 19, wherein said extraction algorithm determining step (S510) further including the step of determining priorities for different kinds of data that can be extracted from said 3D-image based on the particular relevance of different kinds of data in the vehicle situation **characterized by** said at least one parameter.

21. A method according to any of claims 10 to 20, wherein said extraction algorithm determining step (S510) further including the step of analyzing the vehicle situation based on the captured 3D-image, wherein a value of said at least one parameter is obtained from said analyzing step.

22. A method according to any of claims 10 to 21,
further comprising the step (S507) of detecting vehicle status information,
wherein the detected vehicle status information including a value of said at least one parameter.

23. A method according to claim 22, wherein
said vehicle status information including velocity information of said vehicle (1201), and
the size of the visual field from which said data extraction algorithm extracts data is the smaller the higher the velocity of the vehicle (1201) is.

24. A method according to any of claims 10 to 23, further comprising the step of receiving (S505) a value of said at least one parameter that has been input manually.

25. A method according to any of claims 10 to 24, wherein said extraction algorithm determining step (S51 0) including defining variables of an algorithm.

26. A method according to any of claims 10 to 25, wherein said extraction algorithm determining step (S510) including the step of selecting a particular data extraction algorithm out of a plurality of data extraction algorithms.

27. A method according to any of claims 1 to 26, wherein said 3D-vector model (403) represents objects in the environment of the vehicle (1201) by vectors and object classification information, said object classification information associating an object with standard object classes of an object model (801).

28. A method according to claim 27, wherein said object model (801) being pre-stored in a database (411).

29. A method according to claim 27 or 28, wherein said extraction algorithm including the step of obtaining object classification information from the 3D-image.

30. A method according to any of claims 1 to 19, further comprising the step of
generating a 3D-space-and-time model, wherein
said 3D-space-and-time model comprising a sequence of 3D-vector models (403).

31. A method according to claim 30, wherein said sequence of 3D-vector models (403) employing a co-ordinate system fixed to the vehicle (1201) as a reference system.

32. A method according to claim 30 or 31, further comprising the step of generating (S601) a response (413) to the information of the vehicle environment represented by said 3D-space-and-time model.

33. A method according to claim 32, wherein said response (413) being directed towards avoiding an emergency situation such as a threatening collision or a loss of the driver's control over the vehicle (1201).

34. A method according to claim 33, wherein said response (413) comprising notification (S907) of an indication of an emergency situation to be expected.

35. A method according to claim 33, wherein said response (413) comprising notification (S909) of an advice for assisting a driver to avoid an emergency situation.

36. A method according to claim 33, wherein said response (413) comprising an automatic interference (S911) with the vehicle control.

37. A method according to claim 32, wherein said response (413) being directed towards assisting a driver in parking the vehicle (1201).

38. A method according to claim 32, wherein said response (413) comprising taking countermeasures to minimize the consequences of a threatening accident.

39. A method according to claim 38, wherein said countermeasures comprising status control of vehicle safety equipment, such as an air bag or a seat belt.

40. A method according to any of claims 1 to 39, wherein said image capturing step (S500) capturing a plurality of 3D-images from plural camera positions.

41. A method according to claim 40, wherein said plurality of 3D-images representing an environment area including a predetermined range around the vehicle (1201).

42. A method according to any of claims 1 to 41, wherein said 3D-vector model generating step (S530) further employing data from sensors (1202b, 1202c) other than cameras (1202a).

43. A method according to claim 42, further comprising the step of sensor fusion (S803) to transform sensor data (s₁, s₂, s₃, sₙ), including extracted image data into a unique format, and to remove inconsistencies and redundancy.

44. A method according to claim 42 or 43, wherein said other sensors (1202b, 1202c) including at least one of a motion sensor, an accelerometer, a temperature sensor, a radar sensor, and an infrared sensor.

45. A method according to any of claims 1 to 44, further comprising the step of saving (S611) the 3D-vector model (403) in an Event Data Recorder (405).

46. A method according to claim 45, further comprising the steps of
generating a sequence of 3D-vector models (403) during a predetermined period of time, and
saving (S611) said sequence of 3D-vector models (403) into the Event Data Recorder (405).

47. A method according to claim 46, further comprising the step of associating the 3D-vector models (403) of said sequence before saving with time stamps (1003).

48. A method according to claim 47, wherein the 3D-vector models (403) are saved for a predetermined storing time (tₙ-t₀),
the method further comprising the step of detecting an impact caused by an extraordinary event, such as an accident, wherein the 3D-vector models (403) remain permanently saved upon said detection of an impact.

49. A method according to claim 48,
wherein said 3D-vector models are stored in a cyclic storage (1000) having a predetermined storage capacity (1005),
further comprising the step of cyclically overwriting the stored 3D-vector model (403) having the earliest time stamp (1003), until said detection of an impact.

50. An environment monitoring device for monitoring the environment of a vehicle (1201), comprising:
a 3D-camera (1202a) for capturing an image of the environment of the vehicle (1201), the image representing a predetermined area of the vehicle environment; and
first processing means (301) for processing the information acquired by said 3D-camera (1202a), said first processing means (301) including:
extracting means (503) for extracting data from said image by employing a data extraction algorithm; and
model generating means (505) for generating a 3D-vector model (403) of the vehicle environment from said data extracted from said image;
wherein said environment monitoring device further comprising a transmitter (1203) for transmitting the 3D-vector model (403) to an external location with respect to said vehicle (1201).

51. An environment monitoring device according to claim 50, wherein said transmitter (1203) transmitting said 3D-vector model (403) by radio.

52. An environment monitoring device according to claim 50, wherein said transmitter (1203) transmitting said 3D-vector model (403) via a cellular telephone line.

53. An environment monitoring device according to any of claims 50 to 52, wherein said transmitter (1203) transmitting said 3D-vector model (403) for visualizing on an external computer.

54. An environment monitoring device according to any of claims 50 to 53, wherein said transmitter (1203) transmitting said 3D-vector model (403) for evaluating at an external computer.

55. An environment monitoring device according to claim 54, further comprising receiving means (1203) for receiving results of said evaluation transmitted back to the vehicle (1201).

56. An environment monitoring device according to claim 54 or 55, further comprising means for controlling the vehicle by employing the evaluation results received from remote.

57. An environment monitoring device according to any of claims 50 to 56, wherein said external location being a stationary location.

58. An environment monitoring device according to any of claims 50 to 57, wherein said transmitter (1203) transmitting a sequence of 3D-vector models (403) representing a 3D-space-and-time model.

59. An environment monitoring device according to any of claims 50 to 58, wherein said first processing means (301) further including determining means (501) for determining the data extraction algorithm to be employed by said extracting means (503) based on at least one parameter characterizing the vehicle situation.

60. An environment monitoring device according to claim 59, wherein said determining means (501) determining the data extraction algorithm to be adapted to the processing time available for generating the 3D-vector model (403).

61. An environment monitoring device according to claim 59 or 60, wherein said determining means (501) determining the data extraction algorithm to be adapted to the required information content of the 3D-vector model (403).

62. An environment monitoring device according to any of claims 50 to 61, wherein said data extraction algorithm including object recognition.

63. An environment monitoring device according to any of claims 50 to 62, wherein said data extraction algorithm including a step of filtering of the captured image.

64. An environment monitoring device according to any of claims 50 to 64, wherein said data extraction algorithm extracts data only from a part of the image corresponding to a certain visual field.

65. An environment monitoring device according to any of claims 50 to 55, further comprising second processing means (303) for further processing said 3D-vector model (403) for assisting a driver in controlling the vehicle (1201) based on the processing result.

66. An environment monitoring device according to claim 65, wherein said determining means (501) determining a maximum available amount of time for generating and further processing said 3D-vector model (403) based on the vehicle situation.

67. An environment monitoring device according to claim 66, wherein said determining means (501) further taking into account said maximum available amount of time for determining said data extraction algorithm.

68. An environment monitoring device according to claim 67, wherein said determining means (501) determining a maximum amount of data to be extracted in correspondence with said maximum amount of time.

69. An environment monitoring device according to claim 68, wherein said determining means (501) further determining priorities for different kinds of data that can be extracted from said image based on the particular relevance of different kinds of data in the vehicle situation **characterized by** said at least one parameter.

70. An environment monitoring device according to any of claims 59 to 69, wherein said determining means (501) further analyzing the vehicle situation based on the captured image for obtaining a value of said at least one parameter.

71. An environment monitoring device according to any of claims 59 to 62,
further comprising a detector (415) for detecting vehicle status information,
wherein the detected vehicle status information including a value of said at least one parameter.

72. An environment monitoring device according to claim 71, wherein
said vehicle status information including velocity information of said vehicle (1201), and
the size of the visual field from which said data extraction algorithm extracts data is the smaller the higher the velocity of the vehicle (1201) is.

73. An environment monitoring device according to any of claims 59 to 72, further comprising an input interface (401) for receiving a value of said at least one parameter.

74. An environment monitoring device according to any of claims 59 to 73, wherein said determining means (501) defining variables of an algorithm.

75. An environment monitoring device according to any of claims 59 to 74, wherein said determining means (501) selecting a particular data extraction algorithm out of a plurality of data extraction algorithms.

76. An environment monitoring device according to any of claims 50 to 75, wherein said 3D-vector model (403) represents objects in the environment of the vehicle (1201) by vectors and object classification information, said object classification information associating an object with standard object classes of an object model (801).

77. An environment monitoring device according to claim 76, further comprising a database (411) for pre-storing said object model (801).

78. An environment monitoring device according to claim 76 or 77, wherein said extraction algorithm obtaining object classification information from the image.

79. An environment monitoring device according to any of claims 50 to 78, wherein said model generating means generating a 3D-space-and-time model, said 3D-space-and-time model comprising a sequence of 3D-vector models (403).

80. An environment monitoring device according to claim 79, wherein said sequence of 3D-vector models (403) employing a co-ordinate system fixed to the vehicle (1201) as a reference system.

81. An environment monitoring device according to claim 79 or 80, further comprising second processing means (303) for generating a response (413) to the information of the vehicle environment represented by said 3D-space-and-time model.

82. An environment monitoring device according to claim 81, wherein said response (413) being directed towards avoiding an emergency situation such as a threatening collision or a loss of the driver's control over the vehicle (1201).

83. An environment monitoring device according to claim 82, further comprising notifying means for notifying an emergency situation to be expected based on the response (413) generated by said second processing means (303).

84. An environment monitoring device according to claim 82, further comprising notifying means for notifying an advice for assisting a driver to avoid an emergency situation based on the response (413) generated by said second processing means (303).

85. An environment monitoring device according to claim 82, further comprising a controller for automatically interfering with the vehicle control based on the response (413) generated by said second processing means (303).

86. An environment monitoring device according to claim 81, wherein said response (413) being directed towards assisting a driver in parking the vehicle (1201).

87. An environment monitoring device according to claim 81, further comprising a controller for taking countermeasures to minimize the consequences of a threatening accident based on the response (413) generated by said second processing means (303).

88. An environment monitoring device according to claim 87, wherein said controller performing status control of vehicle safety equipment, such as an air bag or a seat belt.

89. An environment monitoring device according to any of claims 50 to 88, comprising a plurality of 3D cameras (1202a) for capturing images from plural positions.

90. An environment monitoring device according to claim 89, wherein the images captured by said plurality of 3D-cameras (1202a) representing an environment area including a predetermined range around the vehicle (1201).

91. An environment monitoring device according to any of claims 50 to 90,
further comprising sensors (1202b, 1202c) other than 3D-cameras,
wherein said model generating means (505) further employing data from said other sensors (1202b, 1202c) for generating said 3D-vector model (403).

92. An environment monitoring device according to claim 91, further comprising sensor fusion means (407) for transforming sensor data (s₁, s₂, s₃, sₙ,), including extracted image data into a unique format, and for removing inconsistencies and redundancy.

93. An environment monitoring device according to claim 91 or 92, wherein said other sensors (1202b, 1202c) including at least one of a motion sensor, an accelerometer, a temperature sensor, a radar sensor, and an infrared sensor.

94. An environment monitoring device according to any of claims 50 to 93, further comprising history recording means (409) for saving the 3D-vector model (403) in an Event Data Recorder (405).

95. An environment monitoring device according to claim 94, wherein
said model generating means (505) generating a sequence of 3D-vector models (403) during a predetermined period of time, and
said history recording means (409) saving said sequence of 3D-vector models (403) into the Event Data Recorder (405).

96. An environment monitoring device according to claim 95, wherein said history recording means (409) further associating the 3D-vector models (403) of said sequence before saving with time stamps (1003).

97. An environment monitoring device according to claim 96, wherein the 3D-vector models are saved in the Event Data Recorder (405) for a predetermined storing time (tₙ-t₀), and
said history recording means (409) further comprising an impact detector for detecting an impact caused by an extraordinary event, such as an accident, and the 3D-vector models (403) remain permanently saved upon an impact is detected by said impact detector.

98. An environment monitoring device according to claim 96 or 97,
wherein said 3D-vector models (403) are stored in a cyclic storage (1000) having a predetermined storage capacity (1005), and
said history recording means (409) cyclically overwriting the stored 3D-vector model (403) having the earliest time stamp (1003), until an impact is detected by said impact detector.
